# EUROPEAN PATENT APPLICATION

(11) **EP 4 525 397 A1**
(43) Date of publication of application: **19.03.2025**
(21) Application number: 23196806.6
(22) Date of filing: 12.09.2023
(51) Int. Cl.: H04L 45/302, H04L 45/00

(54) **METHOD FOR PREPARING A PROGRAMMABLE NETWORK, PROGRAMMABLE NETWORK, NETWORK CONTROLLER, COMPUTER PROGRAM PRODUCT AND COMPUTER-READABLE STORAGE MEDIUM**

(71) Applicant: Siemens Aktiengesellschaft, 80333 München (DE)
(72) Inventor: Varastehhajipour, Amir, 81379 München (DE); Deric, Nemanja, 80807 München (DE); Blenk, Andreas, 86916 Kaufering (DE); Kellerer, Wolfgang, 82256 Fürstenfeldbruck (DE)
(74) Representative: Siemens Patent Attorneys

(57) **Abstract**

The invention is related to a method for preparing a programmable network (1), comprising steps of Receiving by an interface module (4) of the network controller (2) a network preparation request message (M3) to prepare the programmable network (1); sending by the interface module (4) a data plane initialisation request message (M5) comprising a request to initialise a data plane of the programmable network (1) to a data plane initialisation module (9) of the network controller (2); generating respective tag-based forwarding rulesets for the respective network devices (3) by the data plane initialisation module (9); sending a respective tag-based forwarding rule update request message (M7) comprising the tag-based forwarding ruleset to the respective network device (3) by the data plane initialisation module (9); sending a data plane initialisation response message (M6) to the interface module (4) by the data plane initialisation module (9).

## Description

The invention is related to a method for preparing a programmable network, a method to operate a programmable network, a programmable network, a network controller, a computer program product and a computer-readable storage medium.

Networking requirements in industrial networks are increasing and constantly changing. For example, industrial networks need to integrate new security standards such as Zero Trust; modern 5G/6G networks, machine learning applications and new remote control applications introduce even higher latency and throughput requirements. This means that new applications and requirements introduce network flows with a wider variety of Quality of Service (QoS) requirements. New concepts are therefore needed to enable industrial communication networks to adapt frequently to changing requirements. However, the new concepts must also work under tighter cost and resource constraints, i.e. lower costs and better resource utilisation. In the IT networking domain, concepts such as intent-based networking and programmable data planes, such as P4, have been introduced to address similar challenges. These concepts are now being considered and even integrated into the design and deployment of new industrial communication networks.

Operational technology (OT) and information technology (IT) network operators need to ensure that all network flows in industrial communication scenarios consistently receive their QoS requirements. At a data plane, technologies such as Time Sensitive Networking (TSN) and mathematical frameworks such as Deterministic Network Calculus (DNC) are used to serve network flows in a deterministic and predictable manner. To meet the new and changing requirements of future industrial applications, network operators need to frequently adapt the embedded flows. Consequently, the control plane operations and the time required for the network to update must also be deterministic. This can enable consistent network operation and must be guaranteed, otherwise the network may enter an unknown state, resulting in packet drops and violation of QoS guarantees.

A publication of Jang et al. 2015 (Keon Jang, Justine Sherry, Hitesh Ballani, and Toby Moncaster. Silo: Predictable message latency in the cloud. In Proceedings of the 2015 ACM Conference on Special Interest Group on Data Communication, pages 435-448, 2015.) discloses a system called Silo that provides guaranteed network bandwidth, guaranteed packet delay and guaranteed burst allowance in multi-tenant data centres. Silo exploits the tight coupling between bandwidth and delay: controlling tenant bandwidth results in deterministic bounds on network queuing delay. Silo relies on network calculus to place tenant VMs with competing requirements so that they can coexist. A novel hypervisor-based policing mechanism achieves packet pacing at sub-microsecond granularity, ensuring that tenants do not exceed their allowances.

A publication of Grosvenor et al. 2015 (Matthew P Grosvenor, Malte Schwarzkopf, Ionel Gog, Robert NM Watson, Andrew W Moore, Steven Hand, and Jon Crowcroft. Queues don't matter when you can JUMP them! In 12th USENIX Symposium on Networked Systems Design and Implementation (NSDI), pages 1-14, 2015.) discloses an approach of controlling network interference in data centre networks. Network interference occurs when congestion from throughput-intensive applications causes queuing that delays traffic from latency-sensitive applications. To mitigate network interference, QJUMP applies Internet QoS-inspired techniques to data centre applications. Each application is assigned a latency sensitivity level (or class). Packets from higher classes are rate limited at the end host, but once allowed into the network can "jump the queue" over packets from lower classes. In environments with known node counts and link speeds, QJUMP can support service levels ranging from tightly bounded latency to line-rate throughput.

A publication of Van Bemten et al. 2020 (Amaury Van Bemten, Nemanja Deric, Amir Varasteh, Stefan Schmid, Carmen Mas-Machuca, Andreas Blenk, and Wolfgang Kellerer. Chameleon: predictable latency and high utilisation with queue-aware and adaptive source routing. In Proceedings of the 16th International Conference on emerging Networking Experiments and Technologies, pages 451-465, 2020) describes a cloud network called "Chameleon" that provides both predictable latency and high utilisation, two typically conflicting goals, especially in multi-tenant data centres. Chameleon exploits the routing flexibility available in modern communication networks to dynamically adapt to demand, using network computation principles along individual paths. Specifically, Chameleon uses source routing at the "queue-level topology", a network abstraction that takes into account the current state of the network queues and hence the different delays of different paths. Chameleon is based on a simple greedy algorithm and can be deployed at the edge; it does not require any changes to network equipment. We implement and evaluate Chameleon in simulations and a real testbed. Compared to the state-of-the-art, we find that Chameleon can significantly admit and embed up to 15 times more flows, improving network utilisation while meeting strict latency guarantees.

An empirical study of the predictability of SDN switches by Van Bemten et al. 2019 (Amaury Van Bemten, Nemanja Deric, Amir Varasteh, Andreas Blenk, Stefan Schmid, and Wolfgang Kellerer. Empirical predictability study of SDN switches. In 2019 ACM/IEEE Symposium on Architectures for Networking and Communications Systems (ANCS), pages 1-13. IEEE, 2019) describes the results of a benchmark of seven hardware OpenFlow switches. The results show several erroneous and unpredictable behaviours and performance issues. In particular, the results show unpredictable behaviour related to flow and buffer management. The study shows that existing quality of service mechanisms, such as priority queuing, introduce unexpected overheads. These in turn can lead to violations of latency guarantees. Based on the results, initial solutions towards more predictable architectures are discussed.

However, there are some shortcomings in the state-of-the-art deterministic programmable networks and systems such as, especially when a deterministic network employ network reconfigurations to improve the utilisation: They do not provide time guarantees for network updates and they do not perform consistent network updates.

It is an objective of the present invention to provide a solution for ensuring time-guaranteed and consistent network updates in a programmable network.

This objective is achieved by the respective subject matter of the independent claims. Further implementations and preferred embodiments are subject matter of the dependent claims.

The invention provides a concept that enables a deterministic data plane and control plane of programmable industrial networks.

A first aspect of the present invention relates to a method for preparing a programmable network. The programmable network can be designed as a software defined network (SDN). The programmable network comprises network devices. The network devices are programmable forwarding devices in the programmable network, such as SDN/P4 switches. They contain a forwarding table with some match action rules. Incoming traffic is processed based on the existing rules in the table. These forwarding rules can be configured, added, removed and modified by the programmable network controller. The method of preparing the programmable network consists of the following steps.

In a first step of the programmable network preparation method, an interface of a programmable network controller receives a network preparation request message. The network preparation request message comprises a request to prepare the programmable network. For example, a network administrator may initiate the programmable network preparation method, also called network bootstrapping. The network administrator can communicate with the interface module, which can be an interface for both normal users and privileged administrators.

In a next step of the programmable network preparation method, the interface sends a data plane initialisation request to a data plane initialisation module of the network controller. The data plane initialisation module is responsible for initialising the data plane portion of the programmable network, including configuring network devices for the first time. The data plane initialisation request message comprises a request to initialise a data plane of the programmable network by the data plane initialisation module of the network controller.

In a next step of the method of preparing the programmable network, the data plane initialisation module receives the data plane initialisation request message, and the data plane initialisation module initialises provisioning of the data plane in accordance with the data plane initialisation request. The data plane initialisation module generates respective tag-based forwarding rule sets for the respective network devices of the programmable network that define tag-based forwarding of a network packet by the respective network devices as a function of a current state of the programmable network.

In other words, the data plane initialisation module performs a method to enable tag-based forwarding in the network devices of the programmable network. The data plane initialisation module calculates and installs the necessary tags on all network devices for tag-based packet forwarding. The tags are configured statically only once and are not changed during network operation.

In a first sub-step, the data plane initialisation module sends a respective tag-based forwarding rule update request message containing the tag-based forwarding rule set to the respective network device.

In a next sub-step, the respective tag-based forwarding rule update request message is received by the respective network device. The respective network device enables the tag-based forwarding of the network packet according to the respective tag-based forwarding ruleset. The respective network device sends a respective tag-based forwarding rule update response message to the data plane initialisation module when the tag-based forwarding of the network packet is enabled.

The forwarding rule update response message indicates a successful installation of tag-based forwarding by the respective network device.

The corresponding tag-based forwarding rule update response message is received by the data plane initialisation module.

Upon receipt of all tag-based forwarding rule update response messages by the data plane initialisation module, the data plane initialisation module sends a data plane initialisation response message from the data plane initialisation module to the interface module.

In other words, when all network devices have been updated according to their respective tag-based forwarding rule sets, the data plane initialisation module sends a data plane initialisation response message to the interface of the network controller to inform the interface that the data plane of the programmable network is ready.

According to a further embodiment of the invention, the data plane initialisation module sends a network state request message to a digital twin module of the network controller upon receipt of the data plane initialisation request message. The network state request message requests provision of a current state of the programmable network by the digital twin module to the data plane initialisation module. The digital twin module may hold information about the programmable network. This information may include, but is not limited to, network device information and their benchmarking data, flows in the programmable network, resource utilisation and real-time monitoring. The Digital Twin module hosts a network model of the programmable network. The current state holds the overall view of the programmable network, such as the topology, in its database and uses interfaces such as SNMP to read the necessary data from the network devices. In other words, after receiving the data plane initialisation request message, the data plane initialisation module asks the digital twin module for the current state of the network, such as the topology and the network devices.

In a next step of the programmable network preparation method, the digital twin module receives the network state request message and sends the current state of the programmable network to the data plane initialisation module. The current state of the programmable network may be provided by the network model representing the programmable network. Providing the current state based on the network model has the advantage that the current state of the programmable network can be examined based on data provided by the programmable network to the digital twin module. Therefore, it is not necessary to collect current data from the programmable network to determine the current state of the programmable network.

In a next step of the method for preparing the programmable network, the data plane initialisation module receives the current state of the programmable network provided by the digital twin module. The current state may update a current state of the programmable network stored in the data plane initialisation module.

According to a further embodiment of the invention, the tag installation procedure comprises further sub-steps. Upon receipt of the forwarding rule update response message by the data plane initialisation module, the data plane initialisation module sends a network state update request message to the digital twin requesting an update of the network module of the programmable network according to the respective tag-based forwarding ruleset of the network device. The digital twin module may update tag-based forwarding of a network device of the network module according to the tag-based forwarding ruleset provided to the network device of the programmable network. The network device of the network model may represent the network device of the programmable network. In other words, after the tag installation is completed, the digital twin module updates the network model accordingly.

Upon the update of the network model of the programmable network by the digital twin module, the digital twin module sends a network state update message to the data plane initialisation module to indicate the completion of the update of the respective network device of the network model.

According to a further embodiment of the invention, the method for preparing the programmable network comprises further steps. In a step of the method of preparing the programmable network, the data plane initialisation module sends a benchmarking data import request message to the digital twin module. The benchmarking data import request message comprises a request for benchmarking data of the network devices of the programmable network to be imported into a network device performance model by the digital twin module.

Upon receipt of the benchmarking data import request message by the digital twin, the digital twin module sends a network device benchmarking data request to a device benchmarking module of the network controller to request the device benchmarking module to provide benchmarking data about the network devices of the programmable network. The benchmarking module contains procedures and information for benchmarking the performance of different network devices such as edge and transmission switches. It holds information such as worst case packet processing time by edge devices, packet forwarding time by transmit devices, etc. This information can be used to feed the DNC theory to guarantee QoS of flows in the network, both for the data plane and the control plane. It updates the Digital Twin module with new benchmark data. The device benchmarking module receives the network device benchmarking data request and sends a network device benchmarking data response message containing the benchmark data to the digital twin module.

The digital twin module receives the benchmarking data response message comprising the benchmarking data of the network devices of the programmable network and updates the network device performance model of the network model comprising the benchmarking data of the network devices of the network model representing the network devices of the programmable network.

When the device performance model of the network model is updated by the digital twin module, the digital twin module sends a benchmarking data import response message to the data plane initialisation module indicating that the network device performance model of the network model is updated.

In other words, the device benchmarking data, such as reconfiguration time or a processing time, is imported into the digital twin module and stored as the network device performance model. This model is essential for the deterministic operation of the programmable network, specifically as an input to the DNC network model.

According to a further embodiment of the invention, the device benchmarking module controls at least one of the network devices of the programmable network to perform a predefined benchmark test of the network device of the programmable network to generate the benchmark data about the respective network device of the programmable network as a function of results of the predefined benchmark test. In other words, the method comprises the steps of performing a predefined benchmark test of the respective network device by the device benchmarking module to generate the benchmark data about the network device of the programmable network. This benchmark data is obtained from the network devices using specially designed performance measurement procedures defined in the device benchmarking module.

According to a further embodiment of the invention, the method of preparing the programmable network comprises the following additional steps

In one step of the method, the interface sends a control plane initialisation request message to the control plane initialisation module of the network controller. The control plane initialisation module initialises the in-band control plane. It ensures that sufficient resources are reserved for the in-band control plane paths and that they do not interfere with data plane resources. The control plane paths are reserved from the network controller to each edge network device that requires configuration. Network resources are reserved on each path based on the calculated burst and rate of control plane update messages. This calculation is based on the number of hops in the networks, the packet size and the information gathered from benchmarking the forwarding network devices. The control plane initialisation request message contains a control plane initialisation request to initialise an in-band control plane of the programmable network by the control plane initialisation module.

In a next step, the control plane initialisation module receives the control plane initialisation request message to initialise the in-band control plane.

Upon receipt of the control plane initialisation request message by the control plane initialisation module, a method is performed for each edge network device of the programmable network.

The method is configured to provide a respective in-band control plane path connecting a respective edge network device to the network controller.

In this procedure, an in-band control plane path must be defined from the network controller node to each edge network device in the programmable network. The resources on this in-band control plane path are reserved for the lifetime of the programmable network. Resources are defined as the highest priority queue and the device buffer. This calculation is necessary to know how many resources are left for data plane operation so that the QoS guarantees in the network are guaranteed by the DNC. However, as the control plane packets are small and relatively infrequent, the in-band control plane overhead on the programmable network is minimal. As mentioned above, the programmable network is modelled using DNC theory. This guarantees the performance, e.g. an end-to-end delay of the flows on this in-band control plane path. Therefore, the control plane packets will arrive from the network controller to each edge network device in a deterministic and guaranteed time. This is an important factor in ensuring a consistent network update and performance-guaranteed operation.

In a sub-step of the procedure, the control plane initialisation module sends an in-band control plane path request message to a deterministic path allocation module. The deterministic path allocation module is responsible for finding a QoS-guaranteed path for a given flow using an admission control algorithm. If the path cannot be found on the first attempt, it calculates a set of necessary reconfigurations, such as rerouting existing flows to free up network resources so that the new flow can be accommodated in the network. If reconfigurations cannot help, it rejects the flow request.

The in-band control plane path request message includes a request to provide an in-band control plane path from a controller edge network device attached to the network controller to a corresponding edge network device of the programmable network.

In other words, the control plane initialisation module requests the deterministic path allocation module to calculate an in-band control plane path for each node pair comprising the controller edge network device attached to the network controller and the respective edge network device.

The deterministic path allocation module receives the in-band control plane path request message and sends a network state request message to the digital twin module to request a provision of the current state of the programmable network from the digital twin module. The digital twin module receives the network state request message and sends the current state of the programmable network to the deterministic path allocation module via a network state response message.

In a next sub-step, the deterministic path allocation module receives the network state response message containing the current state of the programmable network.

In a next sub-step, the deterministic path allocation module calculates the respective in-band control plane path from the controller edge network device connected to the network controller to the respective edge network device of the programmable network. In other words, using the current state of the programmable network obtained from the digital twin module, the deterministic path allocation module calculates the respective in-band control plane path across high priority queues.

In a next step, the deterministic path allocation module provides the in-band control plane path from the network controller device to the respective edge network device to the control plane initialisation module in an in-band control plane path response message. In other words, the deterministic path allocation module returns the found respective in-band control plane path to the control plane initialisation module.

The control plane initialisation module receives the in-band control plane path response message containing the in-band control plane path from the network controller device to the respective edge network device and generates a tag-based control plane forwarding ruleset for the respective edge network device to enable tag-based forwarding of a network control packet by the respective network device according to the respective control plane path. The control plane initialisation module sends the tag-based control plane forwarding ruleset to the respective edge network device to enable tag-based control plane forwarding by the respective edge network device. In a next step, the respective edge network device receives the tag-based control plane forwarding ruleset and enables tag-based control plane forwarding to forward control plane network packets.

In other words, the control plane initialisation module passes the appropriate packet forwarding rule to the edge device connected to the controller node. In this way, the edge network device adds the necessary tags to the incoming control plane packets from the network controller to the destination edge device, the original destination of the control plane path.

Upon enabling tag-based control plane forwarding by the respective edge network device, the respective edge network device sends a response message to the control plane initialisation module to indicate that the control plane forwarding has been successfully enabled by the edge network device.

Upon receipt of the response message by the control plane initialisation module, the control plane initialisation module sends a network state update request message to the digital twin module comprising the control plane forwarding ruleset of the edge network device to request the digital twin module to update an edge network device of a network model corresponding to the edge network device of the programmable network in accordance with the control plane forwarding ruleset of the edge network device of the programmable network. Upon completion of the update by the digital twin module, the digital twin module sends a message to the control plane initialisation module to indicate the update of the respective edge network device of the network model representing the corresponding edge network device of the programmable network.

In other words, the digital twin module is updated with the newly calculated in-band control plane path and inserted forwarding rules. This completes the control plane initialisation procedure.

Upon completion of the loops for all edge network devices, the control plane initialisation module sends a message to the interface indicating that the in-band control plane is initialised.

Upon receipt of the message indicating initialisation of the data plane and the message indicating initialisation of the in-band control plane, the interface may send a message to an operator or the interface may be set to perform a method of operating the programmable network.

A second aspect of the invention relates to a method of operating a programmable network. The programmable network may be initialised according to a method according to the first aspect of the invention. This is the phase in which the programmable network is in its operating mode in which user flow requests arrive and are served by the programmable network in an online manner.

In a first step of the method of operating the programmable network, a data plane operator module of the network controller receives a network flow request message comprising a request to provide a network flow from a source network device to a destination network that satisfies requested quality of service requirements.

In a next step of the method of operating the programmable network, the data plane operator module sends a deterministic path request message to a deterministic path allocation module. The deterministic path request message comprises a request to provide a deterministic path for the network flow from the source network device to the destination network device.

In other words, as a step towards servicing the received network flow request message, the data plane operator module requests the deterministic path for the flow from the deterministic path allocation module.

In a next step, the deterministic path allocation module receives the deterministic path request message calculates a deterministic path for the network flow based on the current state of the programmable network.

When the deterministic path for the network flow is calculated, the deterministic path allocation module generates a set of forwarding rule updates for the network devices of the programmable network to provide the deterministic path.

The deterministic path allocation module sends a deterministic path response message comprising the set of forwarding rule updates for the network devices of the programmable network to the data plane operator module.

In other words, if the deterministic path allocation module can find the deterministic path for the requested flow, the deterministic path allocation module sends the deterministic path response message to the data plane operator module. The deterministic path response message contains the necessary network updates to be performed. These network updates may include flow reconfigurations and a flow insertion.

The data plane operator module receives the deterministic path response message and sends a rule update schedule request message to a deterministic update schedule module of the network controller. The deterministic update schedule module is responsible for scheduling the network updates in the programmable network in a consistent manner.

The deterministic update schedule module calculates a control plane update schedule using the device benchmarking information such that the network updates to provide the requested flow are fulfilled at the predefined time. To do so, the deterministic update schedule module uses the deterministic control plane paths allocated in the bootstrapping phase, and the device benchmarking information such as reconfiguration time. The deterministic update schedule module ensures that the network updates are reached to each edge network device at a specific time, and the edge network device can process the network update message as the deterministic update schedule module knows the reconfiguration time of the network devices from the benchmarking data.

The deterministic update schedule module takes care of dependencies between the network updates. For instance, suppose that flow B should be re-routed to make up free resources for embedding flow A. In this case, the deterministic update schedule module first sends the control plane message to "re-route flow B" to the responsible edge network device. Given the device benchmarking data and the delay of the control plane path, the deterministic update schedule module deterministically knows how much to wait until flow B is completely re-routed. Thereafter, the deterministic update schedule module sends "insert flow A" to the corresponding edge network device. In this way, it is guaranteed that the consistency of the programmable network is kept, while performing re-routing and addition of a flow.

In other words, the set of network updates necessary to embed the requested flow is sent from the data plane operator module to the deterministic update schedule module.

Then, the deterministic update schedule module asks the digital twin module to provide the current network state for the control plane paths and the device benchmarking information to get the reconfiguration time of the device.

The deterministic update schedule module sends a forwarding rule updates schedule response message comprising the rule update schedule to the data plane operator module. In other words, the deterministic update schedule module schedules the control plane packets to be sent to the respective edge network devices and sends the schedule to the data plane operator module.

The data plane operator module receives the forwarding rule updates schedule response message. The data plane operator module forwards each of the network updates to the corresponding edge network device at the scheduled time.

In a next step the data plane operator module updates the network devices affected by the rule update schedule.

The respective network device receives the respective update forwarding rule request message and updates the forwarding ruleset according to the forwarding update ruleset.

Upon completion of the update, the respective network device sends a message to the data plane operator module indicating the successful forwarding update.

According to a further embodiment, the deterministic path allocation module sends a network state request message to a digital twin module upon receipt of the deterministic path request message, the network state request message comprising a request to provide a current state of the programmable network from the digital twin module. The deterministic path allocation module benefits from flow reconfigurations to be able to accommodate more flows in the network.

The digital twin module receives the network state request message and sends the current state of the programmable network to the deterministic path allocation module in a network state response message.

The deterministic path allocation module receives network state response message comprising the current state of the programmable network

According to a further embodiment, the deterministic update schedule module requests the current network state of the programmable network and device benchmarking information of the network devices from the digital twin module via a network state request message sent to the digital twin module. The digital twin module receives the network state request message and provides the current network state and device benchmarking information to the deterministic update schedule via a network state response message to the deterministic update schedule module.

The deterministic update schedule module receives the network state response message.

In other words, after the network update is complete, the data plane operator updates the network state in the digital twin module.

According to a further embodiment of the invention, the method for operating the programmable network comprises a reception of a data plane packet to be sent via the requested flow by a source network device of the programmable network, wherein the source network device of the programmable network is an edge network device of the programmable network.

In a next step, the source network device adds tags to a header of the data plane packet according to the forwarding rule set for the requested flow to the destination network device along the flow.

In a next step, the data plane packet is sent along the flow to the target network device, wherein the data plane packet is sent to a subsequent network device by a respective network device according to a current tag of the data packet.

A third aspect of the invention relates to a programmable network configured to perform the method for preparing a programmable network according to the first aspect of the invention and/or to perform the method for operating the programmable network according to the second aspect of the invention.

The programmable network comprises a network controller. An interface of the network controller is configured to receive a network preparation request message to prepare the programmable network. The interface of the network controller is configured to send a data plane initialisation request for initialising a data plane of the programmable network to a data plane initialisation module of the network controller. The data plane initialisation module of the network controller is configured to receive the data plane initialisation request

The data plane initialisation module is configured to generate, for each of the network devices, tag-based forwarding rules for the respective network device to enable tag-based packet forwarding of a network packet by the respective network device, and to send the tag-based forwarding rules to the respective network device to enable tag-based forwarding by the respective network device. The respective network device is configured to receive the tag-based forwarding rules, enable the tag-based forwarding rules and, upon enabling the tag-based forwarding rules, send a response message to the data plane initialisation module. The data plane initialisation module is configured, upon receipt of the response message by the data plane initialisation module, to update the network model of the programmable network to the current state of the programmable network in the digital twin module.

In addition or alternatively, the programmable network is configured to perform the method for operating the programmable network.

A data plane operator module of the network controller is configured to receive a network flow request message to provide a flow from a source network device to a target network device with predefined QoS requirements. The data plane operator module is configured to request a deterministic path for the flow from the source network device to the destination network device from a deterministic path allocation module of the network controller. The deterministic path allocation module is configured to request a current state of the network from a digital twin module of the network controller. The digital twin module is configured to provide the current state of the network to the deterministic path allocation module. The deterministic path allocation module is configured to compute the deterministic path for the flow based on the current state of the network, compute a set of necessary forwarding rule updates, and provide the deterministic path and the set of necessary forwarding rule updates to the data plane operator module. The data plane operator module is configured to send a rule update schedule request to a deterministic update scheduler module of the network controller. The deterministic update scheduler module is configured to request the current network state and device benchmarking information of the network devices from the digital twin module. The digital twin module is configured to provide the current network status and device benchmarking information to the deterministic update scheduler. The deterministic update scheduler module is configured to calculate the control plane update schedule using the device benchmarking information such that network updates to provide the requested flow are fulfilled at a predefined time, and to provide the rule update schedule to the data plane operator module.

for each affected device, the data plane operator module providing the respective forwarding rule to the source network device via the control path from the controller to the source network device, by the respective by network device updating forwarding rules to add respective tags to data plane packets from the source network device to the target network device, and sending an acknowledgement to the data plane operator module;
- by the data plane data plane operator module, upon completion of all forwarding rule updates, updating the current network state of the digital twin module and providing a message.

A fourth aspect of the invention is related to a network controller for a programmable network.

A fifth aspect of the invention is related to a computer program product comprising program code for performing a method according to the first aspect and/or the second aspect. The computer program product may also be regarded to a computer program.

A sixth aspect of the invention is related to a computer-readable storage medium comprising at least the computer program product according to the fifth aspect.

The network controller may be understood as a hardware module or as a software module. In particular, a module may also comprise a hardware and a software portion implemented on the hardware. A software module may be understood as a portion of software code functionally connected and combined to a device. A software module may comprise or implement several processing steps and/or data structures. A method step of providing a software module may be understood to comprise providing a respective software code in a computer readable fashion on a computer readable storage medium.

Independent of the grammatical term usage, individuals with male, female or other gender identities are included within the terms.

The network controller and/ot the network devices may comprise computing devices to perform steps of the methods.

A computing device may in particular be understood as a data processing device, which comprises processing circuitry. The computing device may therefore in particular process data to perform computing operations. This may also include operations to perform indexed accesses to a data structure, for example a look-up table, LUT.

In particular, the computing device may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing device may also include one or more processors, for example one or more microprocessors, one or more central processing devices, CPU, one or more graphics processing devices, GPU, and/or one or more signal processors, in particular one or more digital signal processors, DSP. The computing device may also include a physical or a virtual cluster of computers or other of said devices.

In various embodiments, the computing device includes one or more hardware and/or software interfaces and/or one or more memory devices.

A memory device may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.
- FIG 1: shows a schematic illustration of a programmable network according to the state of the art;
- FIG 2: shows a schematic illustration of a method to operate a programmable network according to the state of the art.
- FIG 3: shows a schematic illustration of a programmable network;
- FIG 4: shows a schematic illustration of a programmable network;
- FIG 5: shows a schematic illustration of a method to prepare a programmable network; and
- FIG 6: shows a schematic illustration of a method to operate a programmable network.

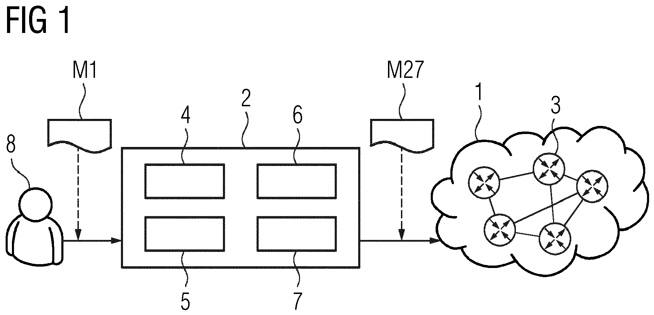

FIG 1 shows a schematic illustration of a programmable network according to the state of the art.

The programmable network 1 may comprise network devices 3. The programmable network 1 and the network devices 3 may be controlled by a network controller 2 of the programmable network 1. The network controller 2 may comprise an interface module 4 configured to receive a network flow request message M1 from a user 8. The network flow request message M1 may comprise a request to provide a flow from a
source edge network device 17 to target edge network device 18 in the programmable network 1 for transmitting network data packets along the flow. The network flow request message M1 may also comprise quality of service requirements. The network controller 2 may comprise a data plane operator module 7. The data plane operator module 7 may be configured to operate a data plane of the programmable network 1. The data plane operator module 7 may be configured to manage modules and functions necessary for the operation of a data plane function, such as a path allocation and a configuration of the network devices 3 of the programmable network 1. The network controller 2 may also comprise a deterministic path allocation module 5. The deterministic path allocation module 5 may be configured to provide a path for the requested flow using an admission control algorithm. The path may be selected such that the quality of service requirements are met by the flow.

The network controller 2 may comprise a network state module 6. The networks state module 6 may be a module that holds an overall sate of the programmable network 1. The network state module 6 may for example comprise data about a topology of the programmable network 1. The network state module 6 may be configured to use interfaces like Simple Network Management Protocol SNMP to read necessary data from the network devices 3. The network devices 3 may be programmable forwarding devices in the programmable network 1 such as software-defined networking SDN/P switches. The network devices 3 may contain forwarding tables comprising match-action rules. The incoming traffic will be processed based on the existing rules in the table. The forwarding routes may be configured via the network controller 2 in order to configure the respective network devices 3 by the network controller 2, the network controller 2 may transmit update forwarding rule request message M27 to the network devices 3 comprising the forwarding rules.

In the problem settings, the flow request message M1 arrives to the network controller 2 during runtime. This flow has a 5-tuple character: s, *t, b, r, d* where they denote source node, target node, required burst e.g., in kb, data rate e.g., in Mbps, and end-to-end delay e.g., in ms. A network path between *s* and *t* must be found such that the QoS requirements bandwidth *b* and end-to-end delay *d* are guaranteed, as well as network update time and consistency. To solve the above problem, the state-of-the-art system presents a system model with the six major modules, which is presented in FIG 1.

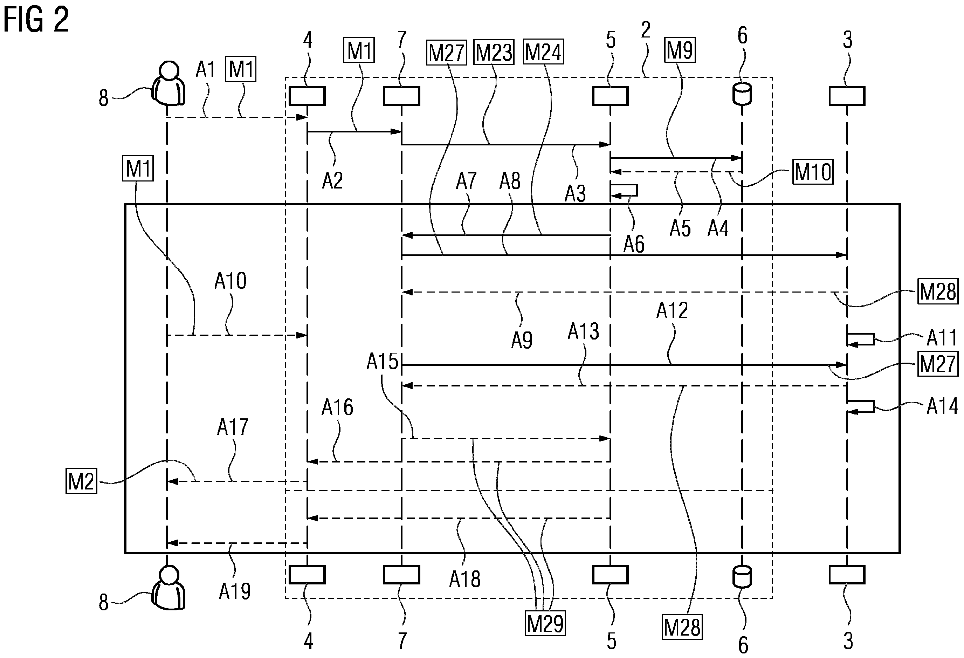

FIG 2 shows a schematic illustration of a method to operate a programmable network according to the state of the art.

In a step A1 of the method, the user 8 may send a network flow request message M1 to the interface module 4 of the network controller 2 of the programmable network 1 requesting a first flow A.

In a step A2, the interface module 4 may receive the network flow request message M1 and send a request to the data plane operator module 7, and the data plane operator module 7 may receive the network flow request message M1.

In a step A3, the data plane operator module 7 may send a deterministic path request message M23 to the deterministic path allocation module 5 comprising a request to provide a deterministic path for the flow requested in the flow request message M1.

In a step A4, the deterministic path allocation module 5 may send a network state request message M9 to the network state module 6 comprising a request to provide a current network state from the network state module 6.

In a step A5, the network state module 6 may send a network state response message M10 comprising the current network state to the deterministic path allocation module 5.

In a step A6, the deterministic path allocation module 5 may calculate the path for the flow.

If a path according to the flow request is found by the deterministic path allocation module 5, the deterministic path allocation module 5 may send a deterministic path response message 24 comprising forwarding rules to the data plane operator module 7 in a step A7.

The data plane operator module 7 may receive the deterministic path response message M24 comprising the forwarding rules and send an update forwarding rule request message 27 comprising first forwarding rules to a respective network device 3 in a step A8.

In a step A9, the respective network device 3 may send an update forwarding rule response message M28 to the data plane operator module 7. The update forwarding rule response message M28 may indicate that the respective network device 3 has received the first forwarding rules.

In a step A10, the interface module 4 of the network controller 2 may receive a second flow request message M1 comprising a request to provide a second flow B.

The user 8 may not know whether the first flow update is complete or not. This may violate network QoS as new updates may conflict with other updates.

In a step A11, the respective network device 3 may enable forwarding according to the first forwarding rules provided by the data plane operator module 7.

In a step A12, the data plane operator module 7 may send the update forwarding rule request message M27 comprising second forwarding rules to the respective network device 3.

In a step A13, the respective network device 3 may send the update forwarding rule response message M28 to the data plane operator module 7. The update forwarding rule response message M28 may indicate that the respective network device 3 has received the second forwarding rules.

In a step A14, the respective network device 3 may enable forwarding according to the second forwarding rules provided by the data plane operator module 7.

A processing time may take longer than expected. Therefore, the network devices 3 may not be updated in time due to lost and/or retransmitted packets and/or congestion of the device control plane, causing a long processing time.

In a step A15, the data plane operator module 7 may send an error message M29 to the deterministic path allocation module 5 indicating that the control plane is not updated in time.

In a step A16, the deterministic path allocation module 5 may forward the error message M29 to the interface module 4.

In a step A17, the interface module 4 may provide the error message M29 to the user 8 to inform the user 8 that the provision of the requested flow has failed.

If no path is found by the deterministic path allocation module 5, the deterministic path allocation module 5 may send the error message M29 to the interface module 4 in a step A18.

In a step A19, the interface module 4 may send the error message M29 to the user 8 indicating that the requested flow may not be provided.

However, there are some shortcomings in the state-of-the-art deterministic programmable networks 1 and systems, especially when a deterministic network employ network reconfigurations to improve the utilisation: They do not provide time guarantees for network updates. In the state-of-the-art system, it is not clear when a certain network update takes effect in the network. This is important from management point of view, and what deterministic guarantees can be delivered to the system user 8, e.g., OT Operator.

They do not perform consistent network updates. Although they provide guaranteed QoS for data plane, however not for control plane and network update process. Since the control plane timing guarantees do not exist, it is not clear when a certain network update reconfiguration must be issued to the devices. For example, if flow A must be re- routed before a new flow B is inserted, we need to ensure that after re-routing, flow A is drained from its original path. If we insert flow B before flow A leaves its original path fully, it causes inconsistent updates; leading to an unknown state, which can cause packet loss, and the violation of the data plane QoS guarantees.

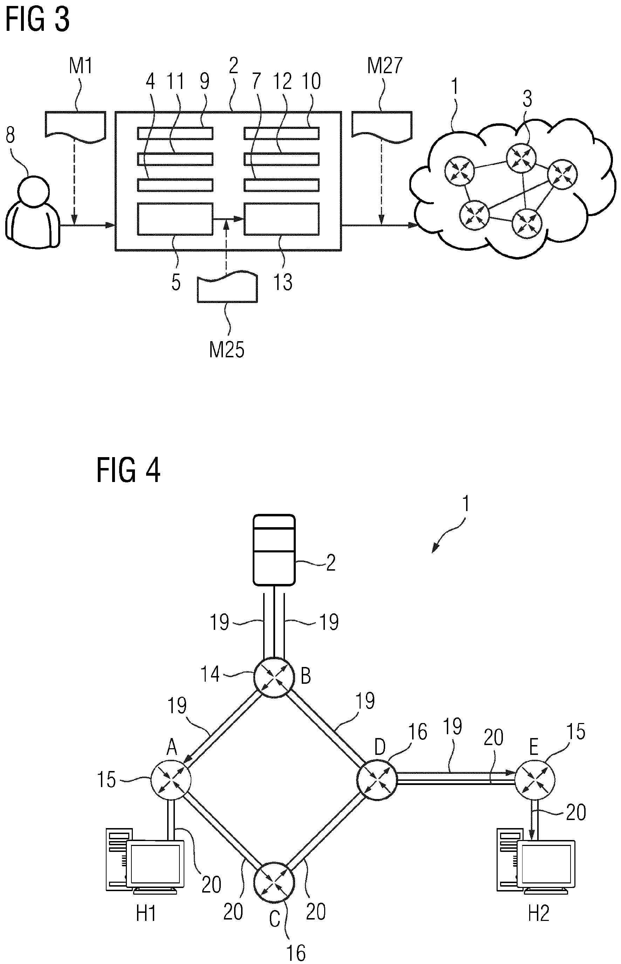

To demonstrate these issues, in FIG. 3, an example using the state-of-the-art system, Chameleon is shown. In this scenario, a user 8 sends a network flow request to the network controller 2 to calculate a data plane path 20 that guarantees the QoS requirement of the flow request. If a suitable path is found, the controller updates the network devices 3 to update their forwarding rules, such that the new flow is inserted. Also, if any reconfiguration is needed, it is done before inserting the new flow.

In this example, the network flow request is sent to the data plane operator module 7via the interface module 4. Then, deterministic path allocation module 5 calculates a path for the flow, given the network state from the current network state. In this example, we consider three different network updates which will end up differently. These control plane messages must be sent from the controller to the network devices 3, so they reconfigure their forwarding table accordingly.

Case 1: control plane update message is lost. In this example, the first network update message rule is lost in the network due to congestion and a few TCP retransmissions happen, and finally it is received and processed by the network device 3. In this case, it is not clear how many times the TCP retransmission has happened. Thus, one cannot guarantee the timely network update.

Case 2: unknown processing times of network devices 3. In this case, the second update rule 2 is not lost in the network no retransmission happens and reached the forwarding device. However, since the device control plane queue is not empty, processing the update rule can take more time. Thus, when inserting the second flow, the network might go into an inconsistent state, because it is not guaranteed when the network is updated. This is when the state-of-the-art fails at providing deterministic guarantees for network updates, and holding the network consistency, leading to packet drops and QoS violations in the data plane.

Case 3: network update conflicts. This happens since the operator does not know when a new network update must be issues after the last one is finished. This case is shown in step A10 where the second flow embedding which consists of one or more network updates is issued while the embedding of the first flow is not finished. This can cause the network to go in an unknown state, leading to potential packet losses and QoS violations.

These issues are mainly due to two fundamental reasons:
The transmission time of the control plane packets from the network controller 2 to the forwarding devices is not known and not bounded. Because in the State-of-the-Art, the control plane is not deterministic, thus the delivery of the control messages i.e., network updates are neither guaranteed nor delay-bounded.

The maximum needed time for processing the control planet packets by the network switch is not considered either. Therefore, even if the network update messages are arrived at the network switch, it is unknown if the network update is processed and when it is applied to the network switch. These issues are tackled in our proposed system, where we propose a novel in-band control plane architecture, where the network updates are time-guaranteed, and the network updates are consistently performed.

FIG 3 shows a schematic illustration of a programmable network.

The programmable network 1 may comprise network devices 3 and a network controller 2 configured to control the network devices 3. The network controller 2 may comprise a data plane initialisation module 9, a control plane initialisation module 10, a device benchmarking module 11, a deterministic update scheduler module 13, and a digital twin module 12. The digital twin module 12 may comprise network model representing the programmable network 1, comprising a current control plane and a current data plane.

The network controller 2 may provide scheduled updates to the network devices 3 to provide timing guaranteed updates. A new system architecture and a number of methodologies to realize an industrial programmable network 1 with both deterministic data and control plane is introduced. The method enables a timed and consistent update of programmable networks 1. With timed updates, network operators do not only know that updates will be integrated consistently, but they also even provide deterministic information about when network updates are put into effect. To achieve this, it relies on networking equipment with predictable forwarding and control plane behavior. To provide models of the control plane of programmable hardware, it provides a new device benchmarking module 11. This information is integrated within a digital network twinning concept, to also enable the operation at runtime. A scheduler module then utilizes the provided information to realize a predictable control plane operation, which does not interfere with the predictable data plane operation. All concepts can work in-band on network equipment that provides network tagging and priority queues.

In this method, timely guaranteed and consistent network updates for programmable networks via in-band control plane are provided. The network lifetime is divided in two phases. bootstrapping and operation. Below we explain the procedure of our system model, and then each of the phases in details.

FIG 3 illustrates a proposed system and its major modules. In comparison to the state-of-the-art, the Network Controller 2 introduces four new modules, the data plane initialisation module 9, the control plane initialisation module 10, the device benchmarking module 11, and, most importantly, the deterministic update scheduler module 13. In addition, digital twin models of both control plane and data plane are integrated in the overall concept using the digital twin module 12.

Similar to the state-of-the-art, flows request messages M1 arrive at the network controller 2 during runtime and must be embedded in the programmable network 1. The approach guarantees that the QoS requirements of the requested flows are met. As a novel contribution, it is ensured that any necessary reconfigurations, such as flow rerouting, are performed in a time-guaranteed and to achieve the objective, the design and implementation of two constraints are required:
Delivery of network update packets must be known and Deterministic. When a flow request message M1 arrives at the network controller 2, the necessary network updates to embed the flow are determined by the deterministic path allocation module 5. Thereafter, control messages are built and delivered to the forwarding source network device 3. These messages need to reach the network device 3, in a consistent manner.

The behaviour of the network device 3 must be known and predictable. These promises are guaranteed with an inband control plane governed by a mathematical framework, Deterministic Network Calculus, DNC. Details about the DNC theory can be found in Keon Jang, Justine Sherry, Hitesh Ballani, and Toby Moncaster. Silo: Predictable message latency in the cloud. In Proceedings of the 2015 ACM Conference on Special Interest Group on Data Communication, pages 435-448, 2015. Thus, it is guaranteed that packets are delivered to the forwarding devices within a deadline.

Processing and the Time-to-Effect of the Network Updates Must be Known and Deterministic. It must be guaranteed that the updates are successfully processed by the forwarding network devices 3 and applied to the programmable network 1. Moreover, to make the network updates time-guaranteed, we must know how long it takes and if this time is deterministic. The behavior of forwarding devices and the determinism of their configuration may be modeled as a switch performance model and are measured and captured using the device benchmarking module 11. All the required network information and statistics may be stored in a digital twin module 12. In more detail, the digital twin module 12 may hold the most updated version of the network s' performance models. This information may be used later by the deterministic update scheduler module 13 when receiving a rule update schedule request message M25 to schedule the network updates such that the processing time of them can be guaranteed.

FIG 4 shows a schematic illustration of a programmable network.

The programmable network 1 may comprise the network controller 2, network devices 3 wherein the network devices 3 may be separated in edge network devices 15 and non-edge network devices 16. The network controller 2 may be connected to the edge network devices 15 via deterministic control plane paths 19 from a controller edge network device 14 to the respective edge network device 15. Computer devices may be connected to the respective edge network devices 15. The network devices 3 may be connected via data plane paths 20 the data plane paths 20 may be configured to transmit data plane network packets. The deterministic control plane path 19 may be configured to transmit network updates 14 to the respective edge network devices 15.

The proposed deterministic communication system and its functionalities are elaborated using an exemplary in FIG 4.

FIG 4 shows a network with two hosts H1, H2, five network devices 3, 15, 16 and a network controller 2. Each network device 3 may have at least two priority queues and support tag-based forwarding. The network is governed by DNC framework, which determines an upper bound for end-to-end delay for flows in the network. Also, it guarantees that there is no packet loss in the network, i.e., no congestion. The highest priority queue is reserved for delivering the control plane messages. Moreover, the network uses source routing and tag-based forwarding. It means that the paths are configured at the source nodes, and some tags, VLAN in this case, are inserted in the packet header. Based on these tags, the packets are forwarded in the network. The non-edge network devices 16 only forward the traffic based on the pre-configured routing table based on the static VLAN tags. The edge network devices 15 in the network configure the source routing and embed the necessary tags for routing the packets in the network. The network devices 3 may be commodity programmable hardware switches. According to Amaury Van Bemten, Nemanja Deric, Amir Varasteh, Andreas Blenk, Stefan Schmid, and Wolfgang Kellerer. Empirical predictability study of SDN switches. In 2019 ACM/IEEE Symposium on Architectures for Networking and Communications Systems ANCS, pages 1-13. IEEE, 2019., they can forward the traffic based on VLANs in a predictable manner. Also, the edge network devices 15 may have a predictable data plane and predictable control plane operations to be bounded, which are ensured via benchmarking of the candidate devices. These measured values are then used in the DNC model to derive an upper bound for the per queue delay. Also, the edge network devices 15 must be able to police the incoming traffic of the hosts. Traffic policing is indeed necessary because it needs to be ensured that the traffic bandwidth of the flow is equal to the required value. Otherwise, the DNC problem and the QoS guaranteed will not be valid anymore. For instance, if a flow request for 1 Mbps bandwidth, and it sends 5 Mbps, the network state enters an incorrect state where there is extra 4 Mbps extra traffic in the network, while the DNC is not aware of it. This can lead to inconsistencies and unpredictability of the network.

To provide a deeper understanding of the system, two phases of the network's lifetime are explained: bootstrapping, and operation:
During the bootstrapping phase, the initialisation of both the data plane and control plane is done. Initially, the controller discovers the hosts and switches in the network, and the device benchmarking module 11 measures the performance models of the network devices 3 in terms of deterministic processing time, reconfiguration time, buffer management, etc. These performance models are stored in the network model of the programmable network 1 stored in the digital twin module 12. Additionally, the tags for tag-based routing are populated in the network devices 3.

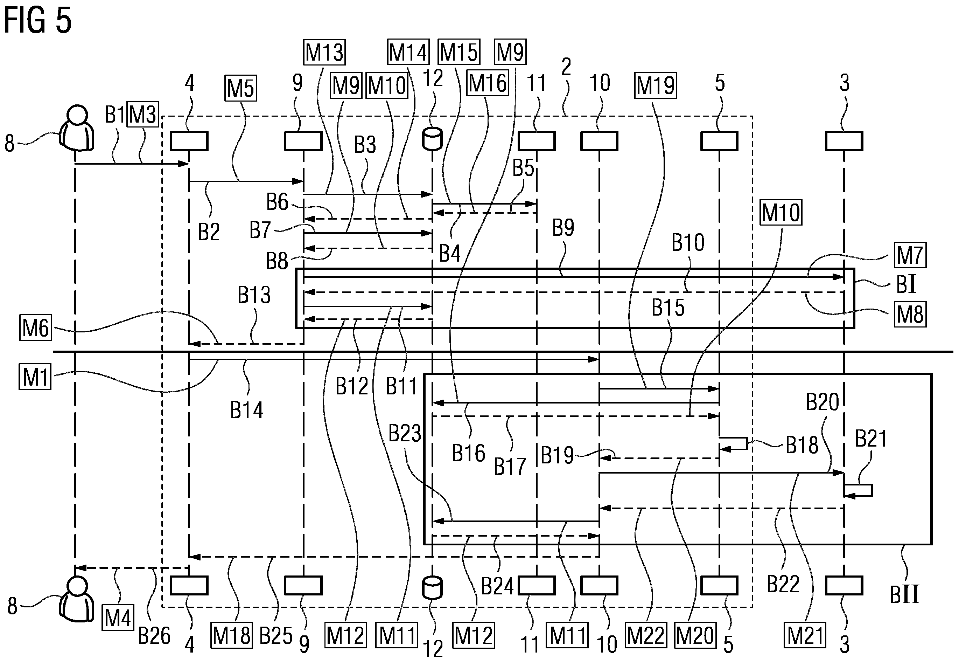

For control plane initialisation, a control plane path 19 is installed between the controller edge network device 14 of the network controller 2 and each edge network device 15, and the necessary resources are reserved. In this way, the network controller 2 may configure the edge network devices 15 for embedding the flows in the programmable network 1 during the operation phase. A control plane flows between the network controller 2 and edge network devices 15 A and E. The detailed sequence diagram of the bootstrapping phase is presented in FIG 5.

The operation phase is the period when the network controller 2 receives flow request messages M1 from users 8 and needs to embed the flow in the programmable network 1 during runtime. When a flow request message M1 is received, the deterministic path allocation module 5 finds a path for the flow and the necessary network updates. To insert a new flow or re-route an existing flow, the controller sends a control message to the corresponding edge device connected to the source host. In FIG 2, the flow request message M1 is received, which asks for a connection from H1 to H2 with a specific delay requirement. The network controller 2 calculates the path as H1-A-C-D-E-H2 and sends a control plane packet to edge network device 15 A to set up the flow between H1 and H2 over nodes A-C-D-E. Since the path from the network controller 2 to edge network device 15 A is governed by DNC, the delay between the network controller 2 and edge network device 15 A is known and guaranteed. Additionally, DNC ensures that the behavior of the programmable network 1 is deterministic, therefore there won't be any packet drops due to congestion.

Edge network device 15 A then adds or edits the forwarding and tagging rules in its table, indicating "add A2- C3-D2-E1 tags to each packet arriving from host H1 belonging to the new flow". This processing time is also known by the performance model of the edge network device 15 A, which was captured by the device benchmarking module 11. Therefore, it may be guaranteed that the flow is embedded in the programmable network 1 by a certain deadline. Note that for predictable control plane operations, it is only relied on the edge network device 15, and non-edge network device 16 15 are not reconfigured during runtime. After a guaranteed flow insertion time, H1 starts transmitting packets towards H2. When the first data plane packet comes from H1 to edge network device 15 A, edge network device 15 A adds A2-C3-D2-E1 tags to the data plane packet. The data plane then looks at the tags, sees the first tag, A2, and forwards the data plane packet to priority queue 2 of edge network device 15 A, removing the tag from the data plane packet. When the data plane packet arrives at non-edge network device 16 15 C, non-edge network device 16 15 C checks the packet tags, parses C3, removes the C3 tag, and forwards it to priority queue 3. This procedure continues until the data plane packet reaches the final edge network device 15 E, with a single remaining tag, E1.

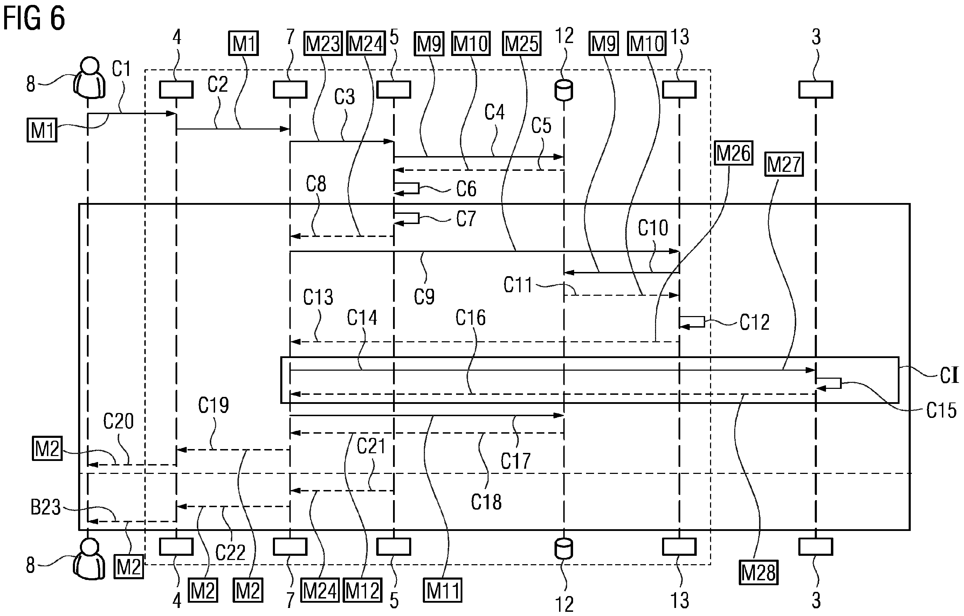

As the last step, edge network device 15 E parses the packet and sees the tag E1, which means that edge network device 15 E should forward this packet to its queue number 1, where it is connected to host H2. The detailed sequence diagram of the bootstrapping phase is presented in FIG 6.

FIG 5 shows a schematic illustration of a method to prepare a programmable network.

In step B1, the interface module 4 of the network controller 2 receives a network preparation request message M3 to prepare the programmable network 1.

In step B2, the interface module 4 sends a data plane initialisation request message M5 comprising a request to initialise a data plane of the programmable network 1 to a data plane initialisation module 9 of the network controller 2.

In step B3, the data plane initialisation module 9 receives the data plane initialisation request message M5 and sends a benchmarking data import request message M13 to the digital twin module 12 comprising a request to import benchmarking data of the network devices 3 of the programmable network 1 into a network device 3 performance model by the digital twin module 12.

In step B4, the digital twin module 12 receives the benchmarking data import request message M13 and sends a network device benchmarking data request message M15 to a device benchmarking module 11 of the network controller 2 comprising a request to provide the benchmarking data on the network devices 3 of the programmable network 1 to the digital twin module 12.

In step B5, the device benchmarking module 11 receives the network device benchmarking data request message M15 and sends a network device benchmarking data response message M16 comprising the benchmarking data to the digital twin module 12.

In step B6, the digital twin module 12 receives the network device benchmarking data response message M16 and updates a network device 3 performance model of the network model of the programmable network 1 according to the benchmarking data. Upon completion of the update, the receiving digital twin module 12 sends a benchmarking data import response message M14 to the data plane initialisation module 9.

In step B7, upon receipt of the benchmarking data import response message M14 by the data plane initialisation module 9, the data plane initialisation module 9 sends a network state request message M9 comprising a request to provide the current state of the programmable network 1 to the digital twin module 12 of the network controller 2 hosting the network model representing the programmable network 1.

In step B8, the digital twin module 12 receives the network state request message M9 and sends a network state response message M10 comprising the current state of the programmable network 1 to the data plane initialisation module 9.

The data plane initialisation module 9 receives the network state response message M10 comprising the current state of the programmable network 1 and generates respective tag-based forwarding rule sets for the respective network devices 3 defining a tag-based forwarding of a network packet by the respective network devices 3 as a function of a current state of the programmable network 1.

Steps B8 to B12 may be sub-steps of a loop BI of a tag installation procedure performed by the programmable network 1 for each of the network devices 3.

In step B9, the data plane initialisation module 9 sends a respective tag-based forwarding rule update request message M7 comprising the tag-based forwarding rule set to the respective network device 3.

In step B10, the respective network device 3 receives the respective tag-based forwarding rule update request message M7 and enables the tag-based forwarding of the network packet according to the respective tag-based forwarding ruleset. The respective network device 3 sends a respective tag-based forwarding rule update response message M8 to the data plane initialisation module 9.

In a step B11, the data plane initialisation module 9 receives the respective tag-based forwarding rule update response message M8. Upon receipt of the respective tag-based forwarding rule update response messages M8 by the data plane initialisation module 9, the data plane initialisation module 9 sends a network state update request message M11 to the digital twin module 12 requesting an update of a tag-based forwarding of a respective network device 3 of the network model representing the network device 3 of the programmable network 1 according to the tag-based forwarding rule set.

In a step B12, the digital twin module 12 receives the network state update request message M11 and updates the respective network device 3 of the network model. Upon completion of the update, the digital twin module 12 sends a network state update response message M12 to the data plane initialisation module 9.

In step B13, the data plane initialisation module 9 receives the network state update response message M12. Upon receipt by the data plane initialisation module 9 of all the tag-based forwarding rule update response messages M8, the data plane initialisation module 9 sends a data plane initialisation response message M6 to the interface module 4.

In a step B14, the interface module 4 may receive the data plane initialisation response message M6 and may send a control plane initialisation request message M17 comprising a request to initialise an in-band control plane of the programmable network 1 to a control plane initialisation module 10 of the network controller 2.
In a step B15, the control plane initialisation module 10 receives the control plane initialisation request message M17.

The control plane initialisation module 10 sends an in-band control plane path 19 request message M19 to a deterministic path allocation module 5, comprising a request to provide an in-band control plane path 19 from a controller edge network device 14 connected to the network controller 2 to a corresponding edge network device 15 of the programmable network 1.

In a step B16, the deterministic path allocation module 5 receives the in-band control plane path 19 request message M19 and sends a network state request message M9 to the digital twin module 12 comprising a request to provide the current state of the programmable network 1 to the deterministic path allocation module 5.

In a step B17, the digital twin module 12 receives the network state request message M9 and sends a network state response message M10 comprising the current state to the deterministic path allocation module 5.

In a step B18, the deterministic path allocation module 5 receives the network state response message M10 and calculates the in-band control plane path 19 as a function of the current state.

In a step B19, the deterministic path allocation module 5 sends an in-band control plane path 19 response message M20 comprising the in-band control plane path 19 to the control plane initialisation module 10.

In a step B20, the control plane initialisation module 10 receives the in-band control plane path 19 response message M20 and generates a control plane forwarding rule comprising tags for sending a network control packet along the in-band control plane path 19 to the respective edge network device 15. The control plane initialisation module 10 sends a control plane forwarding rule update request message M21 comprising the control plane forwarding rule to the controller edge network device 14.

In a step B21, the controller edge network device 14 receives the control plane forwarding rule update request message M21 and enables control plane forwarding according to the control plane forwarding rule.

In a step B22, after enabling the control plane forwarding, the controller edge network device 14 sends a control plane forwarding rule update response message M22 to the control plane initialisation module 10.

In a step B23, the control plane initialisation module 10 receives the control plane forwarding rule update response message M22 and sends a network state update request message M11 to the digital twin module 12 requesting an update of the control plane forwarding of a controller edge network device 14 of the network model representing the controller edge network device 14 of the programmable network 1 according to the control plane forwarding rule.

In a step B23, the digital twin module 12 receives the network state update request message M11 and updates the control plane forwarding rule.

In a step B24, at the end of the update, the digital twin module 12 sends a network state update response message M12 to the control plane initialisation module 10.

In a step B25, the control plane initialisation module 10 receives the network state update response message M12, and upon receiving the network state update response message M12, the control plane initialisation module 10 sends a control plane initialisation response message M18 to the interface module 4.

In a step B26, the interface module 4 receives the control plane initialisation response message M18 and sends a network preparation response message M4 to the user 8 to indicate that the preparation of the programmable network 1 is complete.

At the start, the admin sends network bootstrapping request to the GUI. Bootstrapping is performed in two consecutive steps: data plane initialisation and control plane initialisation. After receiving the data plan initialisation request, the data plane initialisation module 9 asks digital twin module 12 for the state of the network, such as the topology, devices, etc. Then, data plane initialisation module 9 calculates and installs the necessary tags on all the network devices 3, for the tag-based packet forwarding. Note that these tags are configured statically only once and will not be changed during the network operation time. After the tag installation is completed, the digital twin module 12 will be informed about it, to update its database accordingly. Afterwards, the device benchmarking data such as reconfiguration time, processing time, etc. should be imported to the digital twin module 12 and be stored as a network device 3 performance model. This model is vital for deterministic operation of the network, specifically as an input for the DNC network model. This information is retrieved from the network devices 3 using especially designed performance measurement procedures defined in the device benchmarking module 11. With installation of the tags on the devices and importing the benchmarking information by the digital twin module 12, the data plane initialisation procedure is finished.

Control Plane Initialisation: The control plane initialisation module 10 is responsible for initialisation of the in-band control plane. In this step, an in-band control plane path 19 must be determined from the network controller 2 node to each edge devices in the network. The resources on this path will be reserved for the whole lifetime of the network. Resources means the highest priority queue, and the device buffer. This calculation is necessary to know how much resources is left for data plane operation such that the QoS guarantees in the network is guaranteed by the DNC. However, since the control plane packets are small and relatively not frequent, the overhead of the in-band control plane on the network is minimal. As mentioned, the network is modeled with DNC theory. Thus, the performance e.g., end-to-end delay of the flows on this path is guaranteed. Therefore, the control plane packets will reach from the controller to each edge device in a deterministic and guaranteed time duration. This is an important player to guarantee the consistent network updates and a performance-guaranteed operation. To do so, control plane initialisation module 10 firstly asks deterministic path allocation module 5 to calculate a path for each controller, edge device node pair. Afterwards, using the current state of the network fetched from the digital twin module 12, deterministic path allocation module 5 calculates a path over the high-priority queues. Then, it returns the found path to the control plane initialisation module 10. Thereafter, control plane initialisation module 10forwards the corresponding packet forwarding rule to the edge device attached to the controller node. In this way, the edge device will add the necessary tags to the incoming control plane packets from the controller towards the destination edge device originally the destination of the control plane path 19. Then, the digital twin module 12 is updated with the newly calculated path and inserted forwarding rules. With this, the control plane initialisation procedure is finished.

FIG 6 shows a schematic illustration of a method to operate a programmable network.

In a step C1, a user 8 may operate the interface module 4 to send a network flow request message M1 to a data plane operator module 7.

In a step C2, the data plane operator module 7 receives the network flow request message M1 comprising a request to provide a flow from a source network device 3 of the programmable network 1 to a destination network device 3 of the programmable network 1 with predefined QoS requirements.

In a step C3, the data plane operator module 7 sends a deterministic path request message M23 to a deterministic path allocation module 5 comprising a request to provide a deterministic path for the requested flow.

In a step C4, the deterministic path allocation module 5 receives the deterministic path request message M23 and sends a network state request message M9 to the digital twin module 12 comprising a request to provide the current state of the programmable network 1 from the digital twin module 12 to the deterministic path allocation module 5.

In a step C5, the digital twin module 12 receives the network state request message M9 and sends a network state response message M10 comprising the current state to the deterministic path allocation module 5;
in a step C6, the deterministic path allocation module 5 receives the network state response message M10 and calculates the deterministic path for the flow based on the current state of the network.

In a step C7, the deterministic path allocation module 5 generates a data plane forwarding rule for the source edge network device 17 15 comprising tags to send a network data packet along the data plane path 20 to the destination edge network device 3.

In a step C8, the deterministic path allocation module 5 sends a deterministic path response message M24 comprising the data plane forwarding rule to the data plane operator module 7.

In a step C9, the data plane operator module 7 receives the deterministic path response message M24 and sends a rule update schedule request message M25 comprising the data plane forwarding rule to a deterministic update scheduler module 13.

In a step C10, the deterministic update scheduler module 13 receives the rule update schedule request message M25. Upon receipt of the rule update schedule request message M25 by the deterministic update scheduler module 13, the deterministic update scheduler module 13 sends a network state request message M9 to the digital twin module 12 comprising a request to provide the deterministic update scheduler module 13 with the current network state and device benchmarking information of the network devices 3.

In a step C11, the digital twin module 12 receives the network state request message M9 and sends a network state response message M10 comprising the current network state and the device benchmarking information to the deterministic update scheduler module 13.

In a step C11, the deterministic update scheduler module 13 receives the network state response message M10.
In a step C12, the deterministic update scheduler module 13 generates, as a function of the current state and the benchmarking data, a rule update schedule comprising a respective scheduled time to send a respective control network packet comprising the data plane forwarding rule to the respective edge network devices 15 by the controller edge network device 14 via the respective control plane path 19 to activate the data plane forwarding rule at a predefined time.

In a step C13, the deterministic update scheduler module 13 sends a rule update schedule response message M26 comprising the rule update schedule to the data plane operator module 7.

In a step C14, the data plane operator module 7 receives the rule update schedule response message M26 and sends a respective update forwarding rule request message M27 comprising the data plane forwarding rule to the respective edge network device 15 at the respective scheduled time.

In a step C15, the respective edge network device 15 receives the respective update forwarding rule request message M27 and enables the data plane forwarding rule in the respective edge network device 15.

In a step C16, upon completion of the update, the respective edge network device 15 sends a respective update forwarding rule response message M28 to the data plane operator module 7;

In a step C17, the data plane operator module 7 receives the respective update forwarding rule response message M28.

After receiving the respective update forwarding rule response message M28, the data plane operator module 7 sends to the digital twin module 12 a network state update request message M11 comprising a request to update the current network state of the network model.

In a step C18, the digital twin module 12 receives the network state update request message M11, updates the network model and sends a network state update response message M12 to the data plane operator module 7.

In a step C19, the data plane operator module 7 receives the network state update response message M12 and sends a network flow response message M2 to the interface module 4.

In a step C20, the interface module 4 receives the network flow response message M2 and sends a response to the user 8 indicating the provision of the flow.

This is the phase where the network is in its operational mode, i.e., the user flow requests are arriving and being served by the network in an online fashion. The used s in this phase along with the detailed procedure is depicted in Fig. 5. To start the procedure, the user 8 sends the network flow request to the GUI in the network controller 2. The GUI sends the request to the data plane operator to handle it. As the first step towards serving the arrived flow, the data plane operator requests a deterministic path for the flow from the deterministic path allocation module 5. The deterministic path allocation module 5 benefits from flow reconfigurations to be able to fit more flows in the network. If no path can be found, the flow is rejected, and the User 8 will be informed via the GUI. Otherwise, if deterministic path allocation module 5 can find a path for the flow, it sends a response to the data plane operator. The response contains the necessary network updates to be done. These networks updates may contain flow reconfigurations if any, and a flow insertion. These network updates must now be applied in the network.

The deterministic update scheduler module 13 is responsible for scheduling the network updates in the network in a consistent manner. To do so, it uses the deterministic control plane paths 19 allocated in bootstrapping phase, and device benchmarking information such as reconfiguration time. It ensures that the network updates are reached to each edge device at a specific time, and the edge device can process the network update message it knows the reconfiguration time from the benchmarking data.

Also, it takes care of the dependencies between the network updates. For instance, suppose that flow B should be re-routed to make up free resources for embedding flow A. In this case, deterministic update scheduler module 13 deterministic update scheduler module 13 first sends the control plane message to "re-route flow B" to the responsible edge device. Given the device benchmarking data and the delay of the control plane path 19, it deterministically knows how much to wait until flow B is completely re-routed. Thereafter, it sends "insert flow A" to the corresponding edge device. In this way, it is guaranteed that the consistency of the network is kept, while performing re-routing and addition of a flow.

Thus, as it can be seen in Fig. 6, at step C9 the set of network updates necessary to embed the requested flow is sent from the data plane operator to the deterministic update scheduler module 13. Then, deterministic update scheduler module 13 asks digital twin module 12 to get the network state for the control plane paths 19 and the device benchmarking information to get the reconfiguration time of the device. Then, it schedules the control plane packets to be sent to the respective edge devices and sends the schedule to the data plane operator. Then, the data plane operator forwards each of the network updates to the corresponding edge device at the scheduled time. After the network update is completed, the data plane operator module 12 updates the network state in the digital twin module 12. Finally, the User 8 is informed about the successful embedding of the requested flow through the GUI.

The approach guarantees that the networking updates,e.g., flow establishment rules, are applied in a timely manner. That is, it guarantees that the networking updates sent by a centralized controller to the networking devices are applied within a guaranteed time interval. We ensure that the network is updated in a consistent manner. That is, if network update A must be applied before network update B, our system will ensure that the correct update sequence is achieved. • This invention can bring improved and efficient planning by using timing guarantees. • Our work brings higher reliability by giving concrete information to network operators about network update time. Hence, it is harder for humans to break the system. To achieve the previously mentioned advantages, our system introduces and uses the following novel components and mechanisms. These mechanisms and the corresponding components are not used in state-of-the-art deterministic networking systems.

Firstly, to deliver messages in a deterministic manner without packet loss and within guaranteed time, the system relies on deterministic in-band control plane which is embedded during the bootstrapping phase. The deterministic guarantees for the in-band control plane flows are provided by DNC theory. To realize such a control plane, the system introduces and uses a novel which oversees initial bootstrapping of in-band control plane, i.e., control plane initialisation module 10.

Secondly, the system relies on precise data and control plane network device 3 performance models. For example, to provide timing guarantees, it is crucial to know how fast networking devices can apply the updates. To derive such models, our system introduces and uses a novel benchmarking mechanism, and it is implemented within novel device benchmarking module 11. The performance models obtained by device benchmarking module 11 are reported later to the Digital twin module 12. These values are crucial for the correct operation of our system.

Thirdly, to provide consistent network updates with timing guarantees, the system introduces a novel deterministic update scheduler module 13 which realizes the scheduling of network updates. The input parameters of deterministic update scheduler module 13 s are network updates, I.e., a set of required flow reconfigurations and/or insertions. While the output is time schedule for the corresponding network updates. i.e., this determines when the controller should send the control plane messages towards edge devices.

## Claims

1. Method for preparing a programmable network (1), comprising a network controller (2) and network devices (3), comprising steps of:
- Receiving by an interface module (4) of the network controller (2) a network preparation request message (M3) to prepare the programmable network (1);
- sending by the interface module (4) a data plane initialisation request message (M5) comprising a request to initialise a data plane of the programmable network (1) to a data plane initialisation module (9) of the network controller (2) ;
- receiving the data plane initialisation request message (M5) by the data plane initialisation module (9) and generating respective tag-based forwarding rulesets for the respective network devices (3) defining a tag-based forwarding of a network packet by the respective network devices (3) as a function of a current state of the programmable network (1);
- Performing a tag installation procedure by the programmable network (1), comprising sub steps of:
- sending a respective tag-based forwarding rule update request message (M7) comprising the tag-based forwarding ruleset to the respective network device (3) by the data plane initialisation module (9);
- receiving the respective tag-based forwarding rule update request message (M7) by the respective network device (3), enabling the tag-based forwarding of the network package according to the respective tag-based forwarding ruleset by the respective network device (3), and sending a respective tag-based forwarding rule update response message (M8) to the data plane initialisation module (9) by the respective network device (3);
- receiving the respective tag-based forwarding rule update response message (M8) by the data plane initialisation module (9) ;
- upon receipt of all tag-based forwarding rule update response messages (M8) by the data plane initialisation module (9), sending a data plane initialisation response message (M6) to the interface module (4) by the data plane initialisation module (9).

2. Method according to claim 1 comprising steps of:
- upon receipt of the data plane initialisation request message (M5) by the data plane initialisation module (9), sending by the data plane initialisation module (9) a network state request message (M9) comprising a request to provide the current state of the programmable network (1) to a digital twin module (12) of the network controller (2), hosting a network model representing the programmable network (1),
- sending a network state response message (M10) comprising the current state of the programmable network (1) to the data plane initialisation module (9) by the digital twin module (12) ;
- Receiving the network state response message (M10) by the data plane initialisation module (9).

3. Method according to claim 2, wherein the tag installation procedure comprises sub steps of:
- upon receipt of the respective tag-based forwarding rule update response message (M8) by the data plane initialisation module (9), sending a network state update request message (M11) to the digital twin module (12) requesting an update of a tag-based forwarding of a respective network device (3) of the network model representing the network device (3) of the programmable network (1) according to the tag-based forwarding ruleset;
- Receiving by the digital twin module (12) the network state update request message (M11), and updating the respective network device (3) of the network model and upon finish of the update, sending a network state update response message (M12) to the data plane initialisation module (9);
- receiving the network state update response message (M12) by the data plane initialisation module (9).

4. Method according to one of the claims 2 or 3 comprising steps of:
- sending by the data plane initialisation module (9) a benchmarking data import request message (M13) to the digital twin module (12), comprising a request to import benchmark data of the network devices (3) of the programmable network (1) to a network device (3) performance model by the digital twin module (12);
- receiving the benchmarking data import request message (M13) by the digital twin module (12) and upon receipt of the benchmarking data import request message (M13) by the digital twin module (12), sending a network device (3) benchmarking data request message (M15) to a device benchmarking module (11) of the network controller (2) comprising a request to provide the benchmarking data about the network devices (3) of the programmable network (1) to the digital twin module (12) ;
- Receiving by the device benchmarking module (11), the network device (3) benchmarking data request message (M15) and sending a network device (3) benchmarking data response message (M16) comprising the benchmark data to the digital twin module (12);
- receiving by the digital twin module (12) the network device (3) benchmarking data response message (M16) and updating a network device (3) performance model of the network model of the programmable network (1) according to the benchmark data by the digital twin module (12).

5. Method according to claim 4 comprising steps of:
- controlling at least one of the network devices (3) of the programmable network (1) by the device benchmarking module (11) to perform a predefined benchmark test of the network device (3) of the programmable network (1) to generate the benchmark data about the respective network device (3) of the programmable network (1), as a function of results of the predefined benchmark test.

6. Method according to one of the preceding claims comprising steps of:
- sending by the interface module (4) a control plane initialisation request message (M17) comprising a request to initialise an in-band control plane of the programmable network (1) to a control plane initialisation module (10) of the network controller (2);
- receiving by the control plane initialisation module (10) the control plane initialisation request message (M17);
- Performing a control plane preparation procedure by the programmable network (1), comprising sub steps performed for each of the edge network devices (15):
- sending an in-band control plane path (19) request message (M19) to a deterministic path allocation module (5) by the control plane initialisation module (10) comprising a request to provide an in-band control plane path (19) from a controller edge network network device (3) attached to the network controller (2) to a respective edge network device (15) of the programmable network (1);
- receiving the in-band control plane path (19) request message (M19) by the deterministic path allocation module (5), calculating by the deterministic path allocation module (5) the in-band control plane path (19), and sending by the deterministic path allocation module (5) an in-band control plane path (19) response message (M20) comprising the in-band control plane path (19) to the control plane initialisation module (10),
- receiving the in-band control plane path (19) response message (M20) by the control plane initialisation module (10), and generating a control plane forwarding rule comprising tags to send a network control packet along the in-band control plane path (19) to the respective edge network device (15) ;
- by the control plane initialisation module (10), sending a control plane forwarding rule update request message (M21) the control plane forwarding rule to the controller edge network device (15);
- receiving by the controller edge network device (3) the control plane forwarding rule update request message (M21) and enabling a control plane forwarding according to the control plane forwarding rule by the controller edge network device (3);
- upon enabling of the control plane forwarding sending a control plane forwarding rule update response message (M22) to the control plane initialisation module (10) by the controller edge network device (15);
and upon receipt of the network state update response message (M12), sending a control plane initialisation response message (M18) to the interface module (4).

7. Method according to claim 6 wherein the control plane preparation procedure comprises sub steps of:
- Sending by the deterministic path allocation module (5) a network state request message (M9) to the digital twin module (12), comprising a request to provide the current state of the programmable network (1) to the deterministic path allocation module (5);
- Receiving the network state request message (M9) by the digital twin module (12) and sending a network state response message (M10) comprising the current state to the deterministic path allocation module (5);
- Receiving by the deterministic path allocation module (5) the network state response message (M10)

8. Method according to claim 6 or 7 wherein the control plane preparation procedure comprises sub steps of:
- upon receipt of the control plane forwarding rule update response message (M22), sending a network state update request message (M11) to the digital twin module (12) requesting an update of the control plane forwarding of a controller edge network device (15) of the network model representing the controller edge network device (15) of the programmable network (1) according to the control plane forwarding rule;
- Receiving the network state update request message (M11) by the digital twin module (12), and updating the control plane forwarding rule and upon finish of the update, sending a network state update response message (M12) to the control plane initialisation module (10);
- receiving the network state update response message (M12) by the control plane initialisation module (10).

9. Method to operate a programmable network (1), comprising a network controller (2) and network devices (3), comprising steps of:
- receiving a network flow request message (M1) comprising a request to provide a flow from a source network device (3) of the programmable network (1) to a target network device (3) of the programmable network (1) of predefined QoS requirements by a data plane operator module (7) of the network controller (2);
- sending a deterministic path request message (M23) to a deterministic path allocation module (5) by the data plane operator module (7) comprising a request to provide a deterministic path for the requested flow;
- by the deterministic Path Allocation module (5), calculating the deterministic path for the flow based on the current state of the network and a data plane forwarding rule for the source edge network device (17) comprising tags to send a network data packet along the data plane path (20) to the edge target network device (3);
- sending by the deterministic Path Allocation module (5) a deterministic path response message (M24) comprising the data plane forwarding rule to the data plane operator module (7)
- receiving the deterministic path response message (M24) by the data plane operator module (7) and sending a rule update schedule request message (M25) comprising the data plane forwarding rule to a deterministic update scheduler module (13); Receiving the rule update schedule request message (M25) by the deterministic update scheduler module (13)
and generating a rule update schedule as a function of the current status and the benchmarking data comprising a respective scheduled time to send a respective control network packet comprising the data plane forwarding rule to the respective edge network devices (15) by the controller edge network device (15) via the respective control plane path (19), to enable the data plane forwarding rule at a predefined time;
- sending a rule update schedule response message (M26) by the deterministic update scheduler module (13) comprising the rule update schedule to the data plane operator module (7);
- receiving the rule update schedule response message (M26) by the data plane operator module (7);
- sending a respective update forwarding rule request message (M27) comprising the data plane forwarding rule to the respective edge network device (15) at the respective scheduled time
- receiving the respective update forwarding rule request message (M27) by the respective edge network device (15), enabling the data plane forwarding rule in the respective edge network device (15), and sending a respective update forwarding rule response message (M28) to the data plane operator module (7);
- receiving the respective update forwarding rule response message (M28) by the data plane operator module (7), and upon receipt of all update forwarding rule response messages (M28), sending a network flow response message (M30) to the interface module (4).

10. Method according to claim 9, comprising steps of:
- Sending by the deterministic path allocation module (5) a network state request message (M9) to the digital twin module (12), comprising a to request a to provide provision of the current state of the programmable network (1) from the digital twin module (12), to the deterministic path allocation module (5);
- Receiving the network state request message (M9) by the digital twin module (12) and sending a network state response message (M10) the comprising the current state to the deterministic path allocation module (5);

11. Method according to claim 9 or 10, comprising steps of:
- upon receipt of the rule update schedule request message (M25) by the deterministic update scheduler module (13) sending a network state request message (M9) to the digital twin module (12), comprising a request to provide the current network state and device benchmarking information of the network devices (3) to the deterministic update scheduler module (13) ;
Receiving the network state request message (M9) by the digital twin module (12);
Sending a network state response message (M10) to the deterministic update scheduler module (13) comprising the current network state and the device benchmarking information; Receiving the network state response message (M10) by the deterministic update scheduler module (13).

12. Method according to claim 9 to 11, comprising steps of:
- Receiving a data plane packet by the source network device (3),
adding tags to the data plane packet according to the forwarding rules to send the data plane packet to the target network device (3) along the flow;
- Transmission of the data plane packet from the source network device (3) to the target network device (3) by the network devices (3) along the flow according to the tags.

13. Programmable network (1) comprising network devices (3) and a network controller (2), **characterized in that** the programmable network (1) is configured to perform a method according to one of the preceding claims.

14. Network controller (2) for a programmable network (1), **characterized in that** the network controller (2) is configured to perform the network controller (2) related steps of a method according to one of the claims 1 to 12.

15. A computer program product comprising program code for a network controller (2) to perform the network controller (2) related steps of a method according to one of the claims 1 to 12.

16. A computer-readable storage medium comprising at least the computer program product according to claim 15.
